# EUROPÄISCHE PATENTSCHRIFT

(11) **EP 0 649 865 B1**
(45) Veröffentlichungstag und Bekanntmachung des Hinweises auf die Patenterteilung: **10.02.1999**
(21) Anmeldenummer: 94116289.3
(22) Anmeldetag: 15.10.1994
(51) Int. Cl.: C08G 18/67, C09D 175/16

(54) **Wässrige selbstvernetzende Polyurethan-Vinyl-Hybrid-Dispersionen**
Aqueous, self-crosslinking polyurethanevinyl hybrid dispersions
Dispersions de polyuréthane-vinyle hybride aqueux autoréticulants

(30) Priorität: 23.10.1993 DE 4336206
(43) Veröffentlichungstag der Anmeldung: 26.04.1995
(73) Patentinhaber: HOECHST AKTIENGESELLSCHAFT, 65926 Frankfurt am Main (DE)
(72) Erfinder: Klein, Heinz-Peter, Dr., D-55130 Mainz (DE); Geisler, Jörg-Peter, Dr., D-55218 Ingelheim (DE)
(74) Vertreter: Zounek, Nikolai, Dipl.-Ing.

(56) Entgegenhaltungen:
- EP-A- 0 098 752
- EP-A- 0 127 834
- EP-A- 0 279 067
- EP-A- 0 332 326
- DATABASE WPI Week 9328, Derwent Publications Ltd., London, GB; AN 224347 'EPOXY RESIN COMPOSITION' & JP-A-5 148 337 (YOKOHAMA RUBBER) 15. Juni 1993
- CHEMICAL ABSTRACTS, vol. 120, no. 11, Mai 1994, Columbus, Ohio, US; abstract no. 273199q, KATO 'MANUFACTURE OF AQUEOUS EMULSIONS OF ACRYLIC POLYURETHANES' Seite 135 ;

## Beschreibung

Beschichtungssysteme auf Basis von wäßrigen Polyurethan-Dispersionen haben aufgrund ihrer guten Eigenschaften wie Haftung auf unterschiedlichen Substraten, Abriebfestigkeit sowie Flexibilität und Zähigkeit in einem weiteren Anwendungsbereich während der letzten 15 Jahre zunehmend Bedeutung erlangt. Polyurethan-Dispersionen eignen sich insbesondere zur Beschichtung von metallischen und mineralischen Untergründen sowie bei der Kunststoff- und Holzlackierung. Polyurethanharze werden im allgemeinen über externe Emulgatoren oder über den Einbau ausreichender Mengen an ionischen oder nichtionischen Gruppen in das Polyurethanharz in der wäßrigen Phase stabilisiert. Das Eigenschaftsbild von Polyurethan-Dispersionenkann z.B. durch Zusätze von Vinylpolymer-Dispersionen modifiziert werden. Die beispielhaft ausgewählten Schriften US 3,862,074, DE 39 15 459 und EP 0 379 158 beschreiben wäßrige Beschichtungssysteme, die durch einfaches Mischen einer Polyurethan-Dispersion mit Acrylat-Dispersionen hergestellt werden können.

Spezielle Herstellungsverfahren von Vinylpolymeren, bei welchen die Polymerisation von Vinylmonomeren in Anwesenheit von wäßrigen Polyurethan-Dispersionen erfolgt, werden z.B. in den Schriften EP 0 098 752, EP 0 167 188, EP 0 189 945, EP 0 308 115, EP 0 522 419 und EP 0 522 420 beschrieben. Im Falle der Patentschriften EP 0 189 945 und EP 0 308 115 verläuft die Herstellung der Mischung aus Polyurethanen und Vinylpolymeren über die Stufe eines wasserdispergierbaren, Isocyanat-terminierten Polyurethanharzes, welches in einer Lösung von Vinylmonomeren aufgebaut und nach Überführung in die wäßrige Phase kettenverlängert wird. Anschließend erfolgt eine radikalische Polymerisation, bei der weitere Vinylmonomeren dosiert werden können. Hingegen wird in der Patentschrift EP 0 167 188 ein Verfahren offenbart, das über die Zwischenstufe eines Isocyanat-terminierten Polyurethanharzes mit terminalen Acryloylgruppen die Herstellung von Polyurethan-Acrylat-Hybrid-Dispersionen gestattet. Dieses ungesättigte Präpolymer wird nach dem Verdünnen mit radikalisch polymerisierbaren Verbindungen in wäßriger Phase dispergiert und kettenverlängert. Anschließend erfolgt eine radikalisch initiierte Polymerisation in wäßriger Phase zu einer Einkomponenten-Dispersion mit chemisch verbundenen Polyurethan- und Acrylatblöcken.

In den EP 0 098 752, EP 0 522 419 und EP 0 522 420 werden ebenfalls Herstellungsverfahren von Polyurethan-Acryl-Hybrid-Dispersionen beschrieben. Im Unterschied zu dem in der Patentschrift EP 0167188 offenbarten Prozeß erfolgt hier die Synthese der Polyurethan-Acryl-Hybrid-Dispersionen über die Stufe von Polyurethan-Makromonomeren mit terminalen oder lateralen α, β-olefinischungesättigten Gruppierungen, die keine terminalen Isocyanatgruppen aufweisen und daher in wäßriger Phase nicht kettenverlängert werden. Nach Überführung dieser Polyurethan-Makromonomeren in die wäßrige Phase wird auch hier eine radikalisch initiierte Polymerisation in Anwesenheit von mono- und/oder polyfunktionellen Vinylmonomeren durchgeführt. Keine der oben erwähnten Polyurethan-Vinyl-Hybrid-Dispersionen oder Mischungen von Polyurethan- und Vinylpolymer-Dispersionen ist bei Raumtemperatur oder niedrigen Temperaturen selbstvernetzend.

Carbonylgruppen-haltige Vinylpolymere wurden bereits vor mehr als 20 Jahren in der Patentliteratur erwähnt. Ihre Herstellung erfolgt im allgemeinen in einem Emulsionspolymerisations prozess durch Polymerisation von Carbonylgruppenhaltigen Vinylmonomeren mit anderen Vinylmonomeren. Beispielhaft aufgeführt sind hierfür die Patentschriften DE 15 95 393, DE 28 19 092, EP 0 127 834 und EP 0 332 011.

Selbstvernetzende wäßrige Beschichtungssysteme, die auf Mischungen von Polyurethanharzen und Vinylpolymeren basieren, sind in der Patentschrift EP 0 332 326 offenbart. Die Selbstvernetzung erfolgt hier über AzomethinBindungen, die aus einer Reaktion von Hydrazin- mit Carbonylgruppen resultieren. In diesen Beschichtungszusammensetzungen nimmt mindestens ein Polyurethanharz, das im Polymerrückgrat Hydrazin- oder Carbonylgruppen besitzt, an der Vernetzung teil. Eine bevorzugte Herstellungsvariante des Polyurethanpolymers ist dessen Aufbau in Vinylmonomeren, die nach dem Dispergieren des Polyurethanharzes in wäßrigem Medium radikalisch polymerisiert werden. Dieses Verfahren führt zu einer Polymer-Mischung, bestehend aus Polyurethanharz und Vinylpolymer. Mischungen von Polyurethan- und Vinylpolymeren, die beide Carbonylgruppen tragen und über Polyhydrazide vernetzt werden können, sind in der Patentschrift ebenfalls erwähnt. Im Falle einer Carbonylfunktionalität erfolgt deren Einführung in das Polyurethanharz während der Präpolymersynthese und/oder während des Kettenverlängerungsprozesses. Beide Möglichkeiten erfordern Isocyanatreaktive Verbindungen mit Carbonylfunktionalität. Die Vernetzung dieses Carbonylgruppen-haltigen Polyurethanharzes kann mit Hydrazingruppenhaltigen Polyurethan- und Vinylpolymeren sowie Polyhydraziden, die nicht vom Polyurethan- oder Vinyl-Typ sind, erfolgen. Urethan- und Vinylpolymere liegen hier als rein physikalische Mischung vor. Es ist bekannt, daß solche Systeme zur Entmischung neigen, dies bringt neben einer unzureichenden Lagerstabilität eine Verschlechterung der mechanischen Eigenschaften, der Beständigkeitseigenschaften und des Filmaussehens mit sich (z.B. Glanzstörungen, Filmschleier).

Es bestand daher die Aufgabe, selbstvernetzende Bindemittel auf Basis von Urethan- und Vinylpolymeren zu schaffen, die keine Entmischungsneigung haben.

Gegenstand der vorliegenden Erfindung sind wäßrige, selbstvernetzende Bindemittel bestehend aus Polyhydraziden und Dispersionen von Carbonylgruppen-haltigen Polyurethan-Vinyl-Hybrid-Polymeren. Diese sind lagerstabil und können bei niedrigen Temperaturen während und/oder nach der Filmbildung über Azomethinbindungen vernetzen, die aus der Reaktion der Hydrazide mit den Carbonylgruppen des Polyurethan-Vinyl-Hybridpolymeren resultieren. Die Polyurethan-Vinyl-Hybrid-Dispersionen werden durch radikalisch initiierte Polymerisation von ionisch und/oder nichtionisch-stabilisierten Polyurethan-Makromonomeren, die terminale und/oder laterale Vinylgruppen und gegebenenfalls terminale Hydroxyl-, Urethan-, Thiourethan- oder Harnstoffgruppen besitzen, mit Carbonylgruppen-haltigen und weiteren funktionellen sowie nichtfunktionellen Vinylmonomeren hergestellt.

Unter dem Begriff "Carbonylfunktionalität" wird die Carbonylgruppe einer Keton- oder Aldehydverbindung verstanden. Unter dem Begriff "Hydrazid-Funktionalität" wird die Hydrazin-, Hydrazid- oder Hydrazongruppe eines organischen Hydrazins, Hydrazids oder Hydrazons verstanden. Die Bindemittelzusammensetzungen enthalten Hydrazid- und Carbonylgruppen im Verhältnis von bevorzugt 1:40 bis 2:1, besonders bevorzugt von 1:20 bis 2:1.

Die Bausteine der Polyurethan-Vinyl-Hybrid-Dispersionensind Polyhydroxyverbindungen A, Polyisocyanate B , Vinylmonomere C, die mindestens eine gegenüber Isocyanat reaktive Gruppe und mindestens eine Vinylgruppe enthalten, hydrophile Monomere D, die mindestens eine nichtionische hydrophile Gruppe und/oder mindestens eine ionische oder ionogene Gruppe enthalten, und Vinylmonomere E, von denen mindestens eines (Ec) eine Carbonylfunktionalität aufweist. Die Vernetzung dieser Polyurethan-Vinyl-Hybrid-Dispersionen erfolgt durch Umsetzung mit den Polyhydraziden F unter Ausbildung von Azomethinbindungen.

Die Polyhydroxyverbindungen A sind beispielsweise ausgewählt aus den Polyhydroxypolyäthern A1, den Polyhydroxypolyestern A2, den Polyhydroxypolyesteramiden A3, den Polyhydroxypolycarbonaten A4 und den Polyhydroxypolyolefinen A5. Gegebenenfalls werden zu den Verbindungen A noch niedermolekulare Glykole wie beispielsweise Glykol selbst, Di- oder Triäthylenglykol, Propandiol-1,2 oder -1,3, Butandiol-1,4 , Neopentylglykol, Hexandiol-1,6, Cyclohexandimethanol, 2,2-Bis-(4'-hydroxycyclohexyl)propan sowie mehrwertige Alkohole wie Trishydroxyalkylalkane (z. B. Trimethylolpropan) oder Tetrakishydroxyalkylalkane (z.B. Pentaerythrit) hinzugefügt. Diese Polyhydroxyverbindungen können sowohl einzeln als auch im Gemisch eingesetzt werden.

Die Polyhydroxypolyäther A1 können beispielsweise Polyätherdiole der Formel

H - [ -O- (CHR)ₙ- ] ₘ - OH

sein, wobei R ein Wasserstoffrest oder ein Alkylrest mit bis zu 6 C-Atomen ist, gegebenenfalls mit weiteren Substituenten, n ist eine ganze Zahl von 2 bis 6 und m ist eine ganze Zahl von 10 bis 120. Beispiele sind Polyäthylenglykole, Polypropylenglykole, deren Mischpolymere sowie Polytetramethylenglykole. Bevorzugt sind Polypropylenglykole mit einer Molmasse von 400 bis 5000 g/mol. Andere geeignete Polyhydroxypolyäther sind verzweigte Polyhydroxypolyäther der Struktur 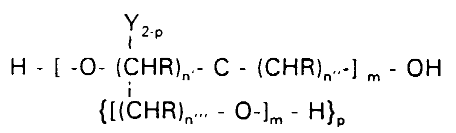 wobei bedeuten
n,n',n'',n''' = 1 ... 6
m = 10 ... 120
p = 0, 1, 2
Y = H, Alkyl,
die beispielsweise durch Umsetzung von drei- oder mehrwertigen Alkoholen wie Glycerin, Trimethylolpropan und Pentaerythrit mit Epoxiden wie Äthylenoxid und/oder Propylenoxid erhalten werden.

Die Polyhydroxypolyester A2 werden hergestellt durch Veresterung von Polycarbonsäuren oder deren Anhydriden mit organischen Polyhydroxyverbindungen. Die Polycarbonsäuren und die Polyhydroxyverbindungen können aliphatisch, aromatisch oder gemischt aliphatisch/aromatisch sein. Geeignete Polyhydroxyverbindungen sind Alkylenglykole wie Glykol, Propandiol-1,2 und - 1,3,Butandiol-1,4, Neopentylglykol, Hexandiol-1,6, Cyclohexandimethanol, 2,2-Bis-(4'-hydroxycyclohexyl)propan sowie mehrwertige Alkohole wie Trishydroxyalkylalkane (z.B. Trimethylolpropan) oder Tetrakishydroxyalkylalkane (z.B. Pentaerythrit). Geeignete Polycarbonsäuren mit 2 bis 18 Kohlenstoffatomen im Molekül sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebacinsäure, Maleinsäure, Glutarsäure, Hexachlorheptandicarbonsäure, Tetrachlorphthalsäure, Trimellithsäure und Pyromellithsäure. Anstelle dieser Säuren können auch ihre Anhydride, soweit diese existieren, verwendet werden. Als Polycarbonsäuren lassen sich auch Dimer- und Trimerfettsäuren einsetzen.

Andere geeignete Polyhydroxypolyester leiten sich ab von Polylactonen, beispielsweise erhältlich durch Umsetzung von ε-Caprolacton mit Polyolen. Solche Produkte sind beispielsweise in der US-PS 3,169,945 beschrieben. Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 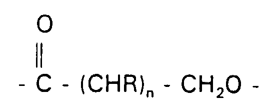 entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome des Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeinen Formel dargestellt werden: 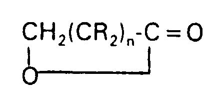 in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Bindemittel mit ausgezeichneten Eigenschaften ergibt.

Außerdem können verschiedene andere Lactone einzeln oder in Kombination benutzt werden.

Beispiele von für die Umsetzung mit dem Lacton geeigneten aliphatischen Polyolen sind Äthylenglykol, 1,3-Propandiol, 1,4-Butandiol, Hexandiol-1,6, Dimethylolcyclohexan, Trimethylolpropan und Pentaerythrit.

Die Polyhydroxypolyesteramide A3 leiten sich beispielsweise ab von Polycarbonsäuren und Aminoalkoholen im Gemisch mit Polyhydroxyverbindungen. Geeignete Polycarbonsäuren und Polyhydroxyverbindungen sind unter A2 beschrieben, geeignete Aminoalkohole sind beispielsweise Äthanolamin und Monoisopropanolamin.

Die Polyhydroxypolycarbonate A4 sind bevorzugt Polycarbonat-diole, die der allgemeinen Formel 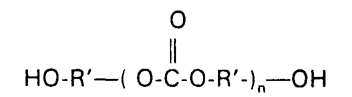 entsprechen, worin R' einen Alkylenrest bedeutet. Diese OH-funktionellen Polycarbonate lassen sich durch Umsetzung von Polyolen wie Propandiol-1,3, Butandiol-1,4, Hexandiol-1,6, Diäthylenglykol, Triäthylenglykol, 1,4-Bis hydroxymethylcyclohexan, 2,2-Bis(4'-hydroxycyclohexyl)propan, Neopentylglykol, Trimethylolpropan, Pentaerythrit, mit Dicarbonaten, wie Dimethyl-, Diäthyl- oder Diphenylcarbonat, oder Phosgen herstellen. Gemische solcher Polyole können ebenfalls eingesetzt werden.

Die Polyhydroxypolyolefine A5 leiten sich beispielsweise ab von oligomeren und polymeren Olefinen mit mindestens zwei endständigen Hydroxygruppen, bevorzugt ist α,ω-Dihydroxypolybutadien zu nennen.

Weitere ebenfalls geeignete Polyhydroxyverbindungen sind Polyacetale, Polysiloxane und Alkydharze.

Die Polyisocyanate B sind die üblicherweise in der Polyurethanchemie verwendeten. Beispiele für geeignete Polyisocyanate sind Trimethylendiisocyanat, Tetramethylendiisocyanat, Pentamethylendiisocyanat, Hexamethylendiisocyanat, 1,5-Diisocyanato-2-methylpentan, 1,12-Diisocyanatododecan, Propylendiisocyanat, Äthyläthylendiisocyanat, 2,3-Dimethyläthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-lsocyanatomethyl-5-isocyanato-1,3,3-trimethylcyclohexan, Bis-(4-isocyanatocyclohexyl)methan, 2,2-Bis-(4'-isocyanatocyclohexyl)propan, 4,4'-Diisocyanatodiphenyläther, 2,3-Bis-(8-isocyanatooctyl)-4-octyl-5-hexylcyclohexen, Tetramethylxylylendiisocyanat, Isocyanurate von obigen Diisocyanaten sowie Allophanate von obigen Diisocyanaten. Gemische solcher Polyisocyanate können ebenfalls eingesetzt werden.

Die Monomeren C enthalten mindestens eine Vinylgruppe und mindestens eine gegenüber Isocyanat reaktive Gruppe, wie Hydroxy-, Mercapto- und Aminogruppen. Bevorzugt sind aliphatische Hydroxyvinylverbindungen mit bis zu 25 C-Atomen.

Terminale Vinylgruppen erhält man durch die Reaktion der Isocyanat-Gruppen enthaltenden Makromonomeren mit Vinylverbindungen C1, die eine gegenüber Isocyanat-Gruppen reaktive Gruppe enthalten und auch durch Reaktion von Isocyanat-Gruppenenthaltenden Makromonomeren mit VinylverbindungenC2, die zwei oder mehr gegenüber Isocyanat-Gruppen reaktive Gruppen enthalten, wenn die Anzahl der Isocyanatgruppen geringer ist als die der gegenüber Isocyanat reaktiven Gruppen. Laterale Vinylgruppen erhält man durch die Reaktion der Isocyanat-Gruppen enthaltenden Makromonomeren mit Vinylverbindungen C2, die zwei oder mehr gegenüber Isocyanat-Gruppen reaktive Gruppen enthalten, wenn die Anzahl der Isocyanatgruppen die der gegenüber Isocyanat reaktiven Gruppen übersteigt.

Geeignete Monovinyl-monohydroxyverbindungen sind Hydroxyalkylester von α,β-ungesättigten Carbonsäuren wie beispielsweise Hydroxyäthyl(meth)acrylat, Hydroxypropyl(meth)acrylat und Hydroxybutyl(meth)acrylat. Andere Beispiele sind aminogruppenhaltige (Meth)Acrylate, Umsetzungsprodukte aus Monoepoxiden und α,β-ungesättigten Carbonsäuren wie das aus Versaticsäureglycidylester und (Meth)acrylsäure, Umsetzungsprodukte aus α,β-ungesättigten Glycidylestern bzw. -äthern mit Monocarbonsäuren, beispielsweise aus Glycidylmethacrylat und Stearinsäure oder Leinölfettsäure. Geeignete Monovinyldihydroxyverbindungen sind Bis-(hydroxyalkyl)-vinylverbindungen wie Glycerin-monovinyläther,-monoallyläther und -mono(meth)acrylatoderdie entsprechenden vom Trimethylolpropan abgeleiteten Verbindungen; weiter Addukte von α,β-ungesättigten Carbonsäuren, wie (Meth)Acrylsäure, an Diepoxide, z.B. Bisphenol-A-diglycidyläther, Hexandioldiglycidyläther; Addukte von Dicarbonsäuren, wie z.B. Adipinsäure, Terephthalsäure oder dergleichen an (Meth)Acrylsäure-glycidylester. Ebenfalls geeignet sind Divinyl-dihydroxy-verbindungen und Monovinyl-trihydroxyverbindungen, die sich beispielsweise vom Pentaerythrit durch Veräthern oder Verestern von einer oder zwei Hydroxygruppen mit Vinylverbindungen herstellen lassen. Diese Verbindungen führen zu verzweigten Strukturen.

Die hydrophilen Monomeren D sind Polyisocyanate Di oder Polyhydroxyverbindungen Dh, die hydrophile Gruppen im Molekül aufweisen. Auch andere Verbindungen mit hydrophilen Gruppen, die mehrere gegenüber Isocyanat reaktive Gruppen aufweisen wie Polyamino- und Polymercaptoverbindungen mit einer hydrophilen Gruppe im Molekül zählen zu der Gruppe Dh. Solche hydrophilen Gruppen sind entweder nichtionisch (n), beispielsweise Polyalkylenoxidgruppen wie Polyäthylenoxid- oder Polypropylenoxidgruppen oder gemischte Polyäthylenoxy-propylenoxy-Gruppen, oder sie liegen in ionischer Form (als Salz) vor oder sie vermögen im Kontakt mit polaren Lösungsmitteln wie Wasser Ionen zu bilden. Dabei kann das Monomer eine anionische oder anionogene Gruppe (a) tragen, beispielsweise eine Carboxylat-, Sulfonat- oder Phosphonat-Gruppe, oder eine kationische oder kationogene Gruppe (k), beispielsweise eine (substituierte) Ammonium- oder Aminogruppe.

Die Monomeren der Gruppe Di, nämlich Polyisocyanate mit hydrophilen Gruppen, werden eingesetzt bei Reaktion mit hydroxyterminierten Urethanpräpolymeren, die Monomeren der Gruppe Dh, nämlich hydrophile Verbindungen mit einer oder mehreren gegenüber Isocyanat reaktive Gruppen werden eingesetzt bei Reaktion mit isocyanatterminierten Urethanpräpolymeren. Geeignete Monomere der Klassifizierung Din sind beispielsweise Reaktionsprodukte von Monohydroxypolyäthern wie Polyäthylenglykolmonobutyläther mit mindestens trifunktionellen Polyisocyanaten.

Geeignete Monomere der Klassifizierung Dhn sind beispielsweise Umsetzungsprodukte von Diisocyanaten mit Gruppen unterschiedlicher Reaktivität mit einem Polyalkylenglykol unter Erhalt einer Isocyanatfunktionalität und nachfolgende Reaktion dieses Isocyanats mit einem Dialkanolamin wie Diäthanolamin. Geeignete Monomere der Klassifizierung Dha sind bevorzugt Diole, die eine ionische Gruppe in Form der Carbonsäure-, Phosphonsäure- oder Sulfonsäuregruppe enthalten. Beispiele für diese Gruppe von Monomeren sind Bishydroxycarbonsäuren mit 2 bis 10 C-Atomen wie z.B. Dihydroxypropionsäure, Dimethylolpropionsäure, Dihydroxyäthylpropionsäure,Dimethylolbuttersäure,2,2-Dihydroxybernsteinsäure,Weinsäure,Dihydroxyweinsäure, Dihydroxymaleinsäure, Dihydroxybenzoesäure, 3-Hydroxy-2-hydroxymethylpropansulfonsäure und 1,4-Dihydroxybutansulfonsäure. Diese Monomeren werden vorzugsweise vor der Umsetzung mit einem tertiären Amin wie beispielsweise Trimethylamin, Triäthylamin, Dimethylanilin, Diäthylanilin oder Triphenylamin neutralisiert, um eine Reaktion der Säuregruppe mit dem Isocyanat zu vermeiden. Ist die Wahrscheinlichkeit einer solchen Reaktion nur gering, können die Säuregruppen auch erst nach ihrem Einbau in das Polyurethan-Makromonomer neutralisiert werden.

Geeignete Monomere der Klassifizierung Dhk sind beispielsweise Monoalkyldialkanolamine wie N-Methyldiäthanolamin oder Dialkyldialkanolammoniumverbindungen.

Die Vinylmonomeren E sind carbonylgruppenhaltige Vinylmonomere Ec, allein oder in Mischung mit anderen Vinylmonomeren En, die keine Carbonylgruppen enthalten.

Die Vinylmonomeren Ec enthalten Vinylgruppen und mindestens eine Carbonylgruppe. Beispiele für solche Vinylmonomeren sind Methylvinylketon, (Meth)Acrolein, Crotonaldehyd, Diaceton(meth)acrylamid, Diaceton(meth)acrylat und gemischte Ester von aliphatischen Diolen mit (Meth)Acrylsäure und Acetessigsäure. Die anderen für die Erfindung geeigneten Vinylmonomeren En ohne Carbonylgruppen sind die in wäßriger Emulsion radikalisch polymerisierbaren Vinylmonomere wie Vinylaromaten, z.B. Styrol, Vinyltoluole, Vinylnaphthalin; Vinylester wie Vinylacetat; Vinylhalogenide wie Vinylchlorid oder -fluorid; Vinyläther, Vinylheterocyclen wie N-Vinylcarbazol, (Meth)Acrylnitril; die Ester, Imide oder Amide ungesättigter Carbonsäuren wie (Meth)Acrylsäure, (iso)Crotonsäure oder Vinylessigsäure mit linearen oder verzweigten Alkoholen wie Methanol, Äthanol, Propanol, Butanol, 2-Äthylhexanol oder Laurylalkohol. Ebenso geeignet sind beispielsweise Hydroxyalkylester dieser Carbonsäuren wie Hydroxyäthyl-oder Hydroxypropyl(Meth)acrylat sowie andere bereits unter C aufgeführte Vinylverbindungen wie beispielsweise Glycidyl(meth)acrylat.

Die Verbindungen mit Hydrazid-Funktionalität F enthalten zwei oder mehrere Hydrazin-, Hydrazid- oder Hydrazongruppen und weisen vorzugsweise ein mittleres Molekulargewicht (Mₙ) von < 1000 auf. Beispiele für solche Verbindungen sind Bishydrazide von Dicarbonsäuren mit 2 bis 12 C-Atomen wie die Bishydrazide der Oxalsäure, Malonsäure, Bernsteinsäure, Glutarsäure, Adipinsäure, Pimelinsäure, Korksäure, Azelainsäure, Sebacinsäure oder der isomeren Phthalsäuren; Kohlensäurebishydrazid, Alkylen- oder Cycloalkylen-bis-semicarbazide, N,N'-Diaminoguanidin, Alkylenbishydrazine wie N,N'-Diaminopiperazin, Arylenbishydrazine wie Phenylen- oder Naphthylenbishydrazin, Alkylenbissemicarbazide, Bishydrazide von Dialdehyden und Diketonen. Verbindungen F mit höherer Funktionalität sind beispielsweise die Hydrazide der Nitrilotriessigsäure oder der Äthylendiamintetraessigsäure.

Die erfindungsgemäßen Polyurethan-Vinyl-Hybridpolymeren können auf verschiedenen Wegen hergestellt werden.

Ein Weg besteht darin, daß zunächst ein Polyadditionsprodukt hergestellt wird durch Polyaddition von Polyhydroxy-Verbindungen A und Polyisocyanaten B. Die Reaktionsprodukte AB mit Isocyanatfunktionalität ABi können dann mit Monomeren des Typs C1 weiter umgesetzt werden zu Produkten ABC1. Die isocyanatfunktionellen Produkte ABC1i können weiter umgesetzt werden mit Monomeren des Typs Dh zu Produkten ABC1Dh. Wenn hierbei alle Isocyanat-gruppen abreagiert haben oder jetzt Hydroxyendgruppen entstanden sind, können die Produkte ohne weiteres weiterverwendet werden; noch vorhandene Isocyanatendgruppen werden mit Alkoholen, primären oder sekundären Aminen oder Mercaptanen zu Urethanen, Harnstoffen oder Thiourethanen umgesetzt und dann erst weiter verwendet. Hierfür kommen beispielsweise in Frage primäre Amine wie Propylamin, Butylamin, Pentylamin, 2-Amino-2-methylpropanol, Äthanolamin, Propanolamin; sekundäre Amine wie Diäthanolamin, Dibutylamin, Diisopropanolamin; primäre Alkohole wie Methanol, Äthanol, Propanol, Butanol, Hexanol, Dodecanol, Stearylalkohol; sekundäre Alkohole wie Isopropanol, Isobutanol und die entsprechenden Thioalkohole. Diese Produkte weisen alle terminale Vinylgruppen auf.

Die Umsetzung von Reaktionsprodukten ABi mit polyfunktionellen Monomeren C2 kann wiederum zu Produkten mit Isocyanatendgruppen ABC2i führen, in diesem Fall sind alle Vinylgruppen lateral. Die anschließende Umsetzung mit den Verbindungen Dh führt zu den fertigen Urethan-Makromonomeren, die bei verbleibender Isocyanatfunktionalität wie oben beschrieben weiterbehandelt werden, ansonsten aber direkt weiterverwendet werden können. In diesem Fall können die Monomeren Dh auch lediglich eine gegenüber Isocyanat reaktive Gruppe enthalten. Beispiele für geeignete Verbindungen sind Aminocarbonsäuren, Aminosulfonsäuren, Aminophosphonsäuren, Hydroxycarbonsäuren oder Hydroxysulfonsäuren wie Aminocapronsäure, Aminoessigsäure, Aminobuttersäure, Aminolaurinsäure, Hydroxybuttersäure, Aminomethansulfonsäure, Aminoäthansulfonsäure, Aminopropansulfonsäure oder die analogen Aminophosphonsäuren, Salicylsäure, Hydroxystearinsäure, 2-Hydroxyäthansulfonsäure.

Die hydroxyfunktionellen Körper ABC2h mit lateralen und auch terminalen Vinylgruppen werden mit den Isocyanat-funktionellen Monomeren Di zu den Urethan-Makromonomeren umgesetzt, bei verbleibender Isocyanatfunktionalität wird wie oben beschrieben verfahren.

Eine Variante ist, das zunächst aus A, B und C gebildete Zwischenprodukt in der Kette zu verlängern, indem die Isocyanatgruppen dieses Polyadditionsprodukts mit Monomeren des Typs Dha wie z.B. Diaminocarbonsäuren oder Diaminosulfonsäuren umgesetzt werden.

Ein anderer bevorzugter Reaktionsweg ist die Umsetzung der Produkte ABi zuerst mit den Monomeren Dh zu Produkten mit Isocyanatfunktionalität ABDhi, die anschließend mit C1 zu Urethan-Makromonomeren mit terminalen Vinylgruppen oder mit C2 zu Urethan-Makromonomeren mit lateralen und wenig oder keinen terminalen Vinylgruppen umgesetzt werden können.

Reaktionsprodukte AB mit Hydroxyfunktionalität ABh werden mit Monomeren Di zu isocyanatfunktionellen Körpern ABDi umgesetzt, die mit Monomeren C1 zu vinylterminalen Urethan-Makromonomeren reagieren. Mit Monomeren C2 ergeben sich Urethan-Makromonomere mit lateralen Vinylgruppen und keinen bis wenigen terminalen Vinylgruppen. Beiverbleibender Isocyanatfunktionalität wird wie oben beschrieben verfahren.

Die oben beschriebenen Umsetzungen lassen sich statt in separaten Schritten auch in weniger Schritten, beispielsweise zwei Schritten oder einem Schritt durchführen.

Die Herstellung der Urethan-Makromonomeren erfolgt nach den üblichen und in der Urethan-Chemie bekannten Methoden. Hierbei können als Katalysatoren tertiäre Amine, wie z.B. Triäthylamin, Dimethylbenzylamin, Diazabicyclooctan sowie Dialkylzinn (IV)-Verbindungen, wie z.B. Dibutylzinndilaurat, Dibutylzinndichlorid, Dimethylzinndilaurat, eingesetzt werden. Die Reaktion findet ohne Lösemittel in der Schmelze statt, in Anwesenheit eines Lösemittels oder in Anwesenheit eines sogenannten Reaktivverdünners. Als Lösemittel kommen solche in Frage, die späterhin durch Destillation oder durch Schleppen mit Wasser entfernt werden können, beispielsweise Methyläthylketon, Methylisobutylketon, Aceton, Tetrahydrofuran, Toluol, Xylol. Diese Lösemittel können ganz oder teilweise nach der Herstellung der Polyurethan-Makromonomeren oder nach der radikalischen Polymerisation abdestilliert werden. Daneben kann man auch wasserverdünnbare hochsiedende Lösemittel, zum Beispiel N-Methylpyrrolidon, einsetzen, die dann in der Dispersion verbleiben. Bei den Reaktivverdünnern handelt es sich um Vinylmonomere E, die in der Endstufe mit den Vinylgruppen enthaltenden Makromonomeren copolymerisiert werden.

Die nach den zuvor beschriebenen Verfahrensvarianten erhaltenen Makromonomere werden dann neutralisiert, falls die ionischen Gruppen in den Monomeren, die solche Gruppen tragen, nicht bereits von vornherein in neutralisierter Form eingesetzt wurden.

Die Neutralisation der sauren Verbindungen erfolgt mit wäßrigen Lösungen von Alkalihydroxiden oder mit Aminen, zum Beispiel mit Trimethylamin, Triäthylamin, Dimethylanilin, Diäthylanilin, Triphenylamin, Dimethylbenzylamin, Dimethyläthanolamin, Aminomethylpropanol, Dimethylisopropanolamin oder mit Ammoniak. Daneben kann die Neutralisation auch mit Mischungen aus Aminen und Ammoniak vorgenommen werden. Die Neutralisation von alkalischen Verbindungen erfolgt beispielsweise mit wäßrigen Lösungen von Mineralsäuren wie Salzsäure oder Schwefelsäure, oder organischen Säuren, wie Essigsäure.

Zur Herstellung der erfindungsgemäßen Polyurethan-Vinyl-Hybrid-Dispersionen werden die nach den zuvor beschriebenen Herstellvarianten erhaltenen Urethan-Makromonomeren, die Vinylgruppen enthalten und auch bereits Vinylmonomere E enthalten können, durch Zugabe von Wasser in eine wäßrige Dispersion überführt und nach Zugabe von (weiteren) Vinylmonomeren E, von denen mindestens eines (Ec) eine Carbonylgruppe enthält, nach an sich bekannten Methoden durch radikalisch initiierte Polymerisation polymerisiert.

Der Gehalt an copolymerisierten Vinylmonomeren beträgt 1 bis 95 Gew.-%, bevorzugt 5 bis 70 Gew.-%, bezogen auf das Gewicht des Feststoffes der Polyurethan-Vinyl-Hybrid-Dispersion. Das Verhältnis von "Weich"- und "Hartsegmenten" in den Urethan-Makromonomeren beträgt 0,30 bis 6, besonders bevorzugt 0,8 bis 3. Zur Definition von "Weich"- bzw. "Hartsegmenten" sei verwiesen auf Developments in Polyurethane-1, Kapitel 1, Seite 34, Elsevier Applied Science Publishers, 1984. Als Initiatoren für die Polymerisation kommen die bekannten radikalbildenden Initiatoren in Frage wie Ammoniumperoxodisulfat, Kaliumperoxodisulfat, Natriumperoxodisulfat, Wasserstoffperoxid, organische Peroxide, wie z.B. Cumolhydroperoxid, t-Butylhydroperoxid, Di-tert.-butylperoxid, Dioctylperoxid, tert.-Butylperpivalat, tert.-Butylperisononanoat, tert.-Butylperäthylhexanoat, tert.-Butylperneodecanoat,Di-2-äthylhexylperoxodicarbonat,Diisotridecylperoxodicarbonat sowie Azoverbindungen, wie z.B. Azo-bis(isobutyronitril), Azo-bis(4-cyanovaleriansäure), oder die üblichen Redoxsysteme, z.B. Natriumsulfit, Natriumdithionit, Ascorbinsäure und organische Peroxide oder Wasserstoffperoxid. Außerdem können noch Regler (Mercaptane), Emulgatoren, Schutzkolloide und andere übliche Hilfsstoffe zugegeben werden.

Erfolgte die Herstellung der Makromonomeren in einem abdestillierbaren Lösemittel, das mit Wasser ein Azeotrop mit einem Siedepunkt unter 100 °C bildet, beispielsweise in Aceton oder Xylol, so wird dieses Lösemittel abschließend aus der Dispersion abdestilliert. Man erhält in allen Fällen wäßrige Polyurethan-Dispersionen. Die Säurezahlen dieser Polyurethan-Dispersionen liegen im Bereich von 5 bis 80, besonders bevorzugt im Bereich von 10 bis 40 Einheiten.

Bevorzugte Ausführungsformen zur Herstellung der Makromonomeren und deren Polymerisation gemeinsam mit den Vinylmonomeren E zu den erfindungsgemäßen Polyurethan-Vinyl-Hybrid-Dispersionen ergeben sich aus den folgenden Verfahrensbeschreibungen.

### 1. Lösemittelfrei

### 1.1 ohne Hilfslösemittel

### 1.1.1 mit terminalen OH-Gruppen

Bei Temperaturen von 100 bis 150 °C, besonders bevorzugt von 120 bis 135 °C, werden ein Monomer Dh (z.B. eine Polyhydroxysäure), gegebenenfalls ein oder mehrere Monomere C und gegebenenfalls niedermolekulare Polyole in einer Polyhydroxyverbindung A mit einer mittleren Molmasse von 400 bis 5000 g/mol gelöst und mit einem Polyisocyanat B oder Polyisocyanatmischungen (die hier und in den folgenden Ausführungsformen auch die isocyanatfunktionellen Vinylmonomeren Di enthalten können) zu einem OH-terminierten Produkt mit einer mittleren Molmasse (Mn) von 500 bis 12000 g/mol, besonders bevorzugt von 600 bis 8000 g/mol, umgesetzt. Nach dem Abkühlen auf eine Temperatur von 30 bis 100 °C, besonders bevorzugt von 50 bis 70 °C, wird ein nicht isocyanatreaktives Vinylmonomer (Reaktivverdünner) E sowie eine mindestens difunktionelle, NCO-reaktive Vinylverbindung C2 zugegeben. Bei dieser Temperatur wird durch weitere Zugabe von Polyisocyanat B, das im Unterschuß zu den OH-Komponenten vorliegt, zu einem OH-funktionellen Polyurethanmakromonomeren mit einer mittleren Molmasse von 700 bis 24000 g/mol, besonders bevorzugt von 800 bis 16000 g/mol, umgesetzt. Diese so erhaltene Harzlösung wird nach Neutralisation mit Aminen oder anderen Basen in Wasser dispergiert. Zu der so erhaltenen Dispersion werden weitere Vinyl-Comonomere Ec und gegebenenfalls En vor oder während der radikalischen Polymerisation gegeben. In der wäßrigen Dispersion werden dann mit radikalbildenden Initiatoren die Vinylverbindungen bei einer Temperatur von 0 bis 95 °C, besonders bevorzugt von 40 bis 95 °C, und bei Verwendung von Redoxsystemen bei einer Temperatur von 30 bis 70 °C polymerisiert. Dabei entsteht eine lösemittelfreie Polyurethan-Vinyl-Hybrid-Dispersion.

### 1.1.2 mit terminalen Urethan-, Thiourethan- oder Harnstoffgruppierungen

Bei Temperaturen von 100 bis 150 °C, besonders bevorzugt von 120 bis 135 °C, werden ein Monomer Dh (z.B. eine Polyhydroxysäure) und gegebenenfalls niedermolekulare Polyole sowie gegebenenfalls ein oder mehrere Monomere C in einer Polyhydroxyverbindung A mit einer mittleren Molmasse von 400 bis 5000 g/mol gelöst und mit einem Polyisocyanat B oder Polyisocyanatmischungen zu einem OH-terminierten Produkt mit einer mittleren Molmasse (Mn) von 500 bis 12000 g/mol, besonders bevorzugt von 600 bis 8000 g/mol, umgesetzt. Nach dem Abkühlen auf eine Temperatur von 30 bis 100 °C, besonders bevorzugt von 50 bis 70 °C, wird ein nicht isocyanatreaktives Vinylmonomer (Reaktivverdünner) E sowie eine mindestens difunktionelle, NCO-reaktive Vinylverbindung C2 zugegeben. Bei dieser Temperatur wird durch weitere Zugabe von Polyisocyanat B ein NCO-terminiertes Harz aufgebaut und nach der weiteren Reaktion mit einer monofunktionellen, isocyanatreaktiven Verbindung, ausgewählt aus Alkoholen, primären oder sekundären Aminen und Mercaptanen, zu einem Polyurethan-Makromonomeren mit terminalen über eine Urethan-, Thiourethan- oder Harnstoffgruppierung gebundenen hydrophilen Gruppen und einer mittleren Molmasse von 700 bis 24000 g/mol, besonders bevorzugt von 800 bis 16000 g/mol, umgesetzt. Diese so erhaltene Harzlösung wird nach Neutralisation mit Aminen oder anderen Basen in Wasser dispergiert. Zu der so erhaltenen Dispersion werden weitere Vinyl-Comonomere Ec und gegebenenfalls En vor oder während der radikalischen Polymerisation gegeben. In der wäßrigen Dispersion wird dann mit radikalbildenden Initiatoren bei einer Temperatur von 0 bis 95 °C, besonders bevorzugt von 40 bis 95 °C, und bei Verwendung von Redoxsystemen bei einer Temperatur von 30 bis 70 °C polymerisiert. Dabei entsteht eine lösemittelfreie Polyurethan-Vinyl-Hybrid-Dispersion.

### 1.2 mit Hilfslösemittel

### 1.2.1 mit terminalen OH-Gruppen

Im Unterschied zu Verfahren 1.1.1 werden hier alle gegenüber Isocyanat reaktiven Komponenten A, C und Dh in einem aus der wäßrigen Phase fraktionierbaren bzw. mit Wasser ein Azeotrop bildenden Lösemittel gelöst und direkt mit einem Polyisocyanat B oder einer Polyisocyanatmischung zu einem OH-terminierten Polyurethan-Makromonomeren mit einer Molmasse von 500 bis 30000 g/mol, bevorzugt von 700 bis 20000 g/mol umgesetzt. Der Lösemittelgehalt beträgt 1 bis 80 Gew.-%, besonders bevorzugt zwischen 10 und 50 Gew.-%, bezogen auf den Festkörper des Polyurethan-Makromonomers. Die Temperatur für diesen Schritt liegt zwischen 30 und 100 °C, besonders bevorzugt zwischen 50 und 80 °C. Nach Neutralisation mit Aminen oder anderen Basen wird in Wasser dispergiert. Anschließend wird das Hilfslösemittel, eventuell unter Vakuum, aus der wäßrigen Phase destilliert. Zu dieser lösemittelfreien Dispersion werden die Vinylmonomere Ec und gegebenenfalls En vor oder während radikalischen Polymerisation gegeben. Danach wird mit radikalbildenden Initiatoren bei einer Temperatur zwischen 0 und 95 °C, besonders bevorzugt zwischen 40 und 95 °C, bei Verwendung von Redoxsystemen bei einer Temperatur von 30 bis 70 °C zu einer lösemittelfreien Polyurethan-Vinyl-Hybrid-Dispersion polymerisiert.

### 1.2.2 mit terminalen Urethan-, Thiourethan- oder Harnstoffgruppierungen

Im Unterschied zu Verfahren 1.1.2 werden hier alle gegenüber Isocyanat reaktiven Komponenten A, C und Dh in einem aus der wäßrigen Phase fraktionierbaren bzw. mit Wasser ein Azeotrop bildenden Lösemittel gelöst und direkt mit einem Polyisocyanat B oder einer Polyisocyanatmischung zu einem NCO-terminierten Urethan-Makromonomeren umgesetzt. Der Lösemittelgehalt beträgt 1 bis 80 Gew.-%, bevorzugt zwischen 10 und 50 Gew.-%, bezogen auf den Festkörper des Polyurethan-Makromonomers. Die Temperatur für diesen Schritt liegt zwischen 30 und 100 °C, besonders bevorzugt zwischen 50 und 80 °C. Nach der weiteren Umsetzung mit einer monofunktionellen, isocyanatreaktiven Verbindung, ausgewählt aus Alkoholen, primären oder sekundären Aminen und Mercaptanen, zu einem Polyurethan-Makromonomeren mit Urethan-, Thiourethan- oder Harnstoffgruppierungen und einer Molmasse von 500 bis 30000 g/mol, besonders bevorzugt von 700 bis 20000 g/mol, wird mit Aminen oder anderen Basen neutralisiert und in Wasser dispergiert. Anschließend wird das Hilfslösemittel, eventuell unter Vakuum, aus der wäßrigen Phase destilliert. Zu dieser lösemittelfreien Dispersion werden die Vinylmonomeren Ec und gegebenenfalls En vor oder während der radikalischen Polymerisation gegeben. Danach wird mit radikalbildenden Initiatoren bei einer Temperatur zwischen 0 und 95 °C, besonders bevorzugt zwischen 40 und 95 °C, bei Verwendung von Redoxsystemen bei einer Temperatur von 30 bis 70 °C zu einer lösemittelfreien Polyurethan-Vinyl-Hybrid-Dispersion polymerisiert.

Als Lösemittel kommen bei den Verfahren entsprechend 1.2.1 und 1.2.2 zum Beispiel Aceton, Tetrahydrofuran, Dioxan, Methyläthylketon, Methylisobutylketon, Toluol oder Xylol in Frage.

### 2. Lösemittelhaltig

Bei Benutzung eines nichtdestillierbaren Hilfslösemittels wie zum Beispiel N-Methylpyrrolidon wird genauso wie in Verfahren 1.2.1 und 1.2.2 vorgegangen, wobei aber nach dem Dispergieren die Destillation entfällt. Die Polymerisation wird wie in Verfahren 1.2.1 und 1.2.2 durchgeführt. Der Lösemittelgehalt liegt im Bereich von 0,1 bis 30 Gew.-%, besonders bevorzugt von 1 bis 15 Gew.-%, bezogen auf die gesamte Bindemittel-Dispersion.

Aufgrund ihres chemischen Aufbaus sind die erfindungsgemäßen Polyurethan-Vinyl-Hybrid-Dispersionen für eine vielerlei Anwendungen geeignet, z.B. zur Herstellung von Beschichtungssystemen, als Bindemittel für wasserverdünnbare Klebstoffe oder als Harze für Druckfarben.

Aufgrund der bereits bei der Filmbildung bei Raumtemperatur eintretenden Vernetzungsreaktion der erfindungsgemäßen selbstvernetzenden Polyurethan-Dispersionen eignen sich diese hervorragend zur Erzeugung chemikalien-, wasser- und hitzebeständiger Überzüge/Beschichtungen auf thermisch empfindlichen Materialien, z.B. Holz, Papier und Kunststoffen.

Die erfindungsgemäßen Polyurethan-Vinyl-Hybrid-Dispersionenlassen sich auf die verschiedensten Substrate, z.B. Keramik, Kompositwerkstoffe, Holz (z.B. Echthölzer, Furniere, Spanplatten, Sperrholz etc.), Glas, Beton, Leder und Textilien, insbesondere Kunststoffe, wie Polycarbonat, Polystyrol, Polyvinylchlorid, Polypropylen, Polyäthylen, PUR-RIM, Polyester, Poly(meth)acrylate, Acrylnitril-Butadien-Styrol-Polymerisate und dergleichen, sowie insbesondere auf Metalle, wie Eisen, Kupfer, Aluminium, (galvanisiertem) Stahl, Messing, Bronze, Zinn, Zink, Titan, Magnesium und dergleichen aufbringen. Sie haften auf den verschiedenen Unterlagen ohne haftvermittelnde Grundierungen bzw. Zwischenschichten. Sie sind kombinierbar und im allgemeinen verträglich mit anderen wäßrigen Kunststoffdispersionen und -lösungen, z.B. Acryl- und/oder Methacrylpolymerisaten, Polyurethanen, Polyharnstoff-, Polyester- sowie Epoxidharzen, Thermoplasten auf Basis von Polyvinylacetat, -vinylchlorid, -vinyläther, -chloropren, -acrylnitril, Acrylnitril-Butadien-Styrol-Copolymerisaten, usw. Sie lassen sich auch mit verdickend wirkenden Substanzen auf Basis von carboxylgruppenhaltigenPolyacrylaten bzw. Polyurethanen, Hydroxyäthylcellulose, Polyvinylalkoholen sowie anorganischen Thixotropierungsmitteln, wie Bentonit, Natrium-Magnesium- und Natrium-Magnesium-Fluor-Lithium-Silikaten, kombinieren.

Die erfindungsgemäßen Polyurethan-Dispersionen sind z.B. für die Herstellung von korrosionsschützenden Überzügen und/oder Zwischenbeschichtungen für die verschiedensten Anwendungsgebiete geeignet, insbesondere zur Herstellung von Metallic- und Unibasislacken in Mehrschicht-Lackaufbauten für die Gebiete der Automobil- und Kunststofflackierung und zur Erzeugung von Grundierungslacken für das Gebiet der Kunststofflackierung. Besonders geeignet sind die erfindungsgemäßen Bindemittel zur Herstellung von Basislacken auf Substraten aller Art (wie oben ausgeführt), insbesondere für die Beschichtung von Holz und Metallen. Hierbei ist die verbesserte Warmbeständigkeit in Verbindung mit der guten Schwitzwasserbeständigkeit ein entscheidender Vorteil.

Aufgrund von kurzen Ablüftzeiten der auf den erfindungsgemäßen Polyurethan-Dispersionen basierenden Basislacke kann die pigmentierte Basislackschicht ohne Einbrennschritt (Naß-in Naß-Verfahren) mit einem Klarlack überlackiert und anschließend zusammen eingebrannt oder forciert getrocknet werden. Basislacke, hergestellt mit den erfindungsgemäßen Polyurethan-Dispersionen, liefern weitgehend unabhängig von der Einbrenn- bzw. Trocknungstemperatur Lackfilme gleicher Qualität, so daß sie sowohl als Reparaturlack von Kraftfahrzeugen als auch als Einbrennlack bei der Serienlackierung von Kraftfahrzeugen eingesetzt werden können. In beiden Fällen resultieren Lackfilme mit einer guten Haftung auch auf der Original lackierung und mit einer guten Beständigkeit gegenüber Schwitzwasser. Weiterhin wird die Brillanz der Lackschicht nach einem Schwitzwassertest nicht nennenswert verschlechtert.

Bei der Formulierung von wasserverdünnbaren Lacken mit den erfindungsgemäßen Polyurethan-Dispersionen können die in der Lackindustrie üblichen Vernetzer, wie z.B. wasserlösliche oder -emulgierbare Melamin- oder Benzoguanaminharze, Polyisocyanate, Epoxidharze, wasseremulgierbare Polyisocyanate oder wasseremulgierbare Präpolymere mit endständigen Isocyanat-gruppen, wasserlösliche oder - dispergierbare Polyaziridine und blockierte Polyisocyanate zugesetzt werden. Die wäßrigen Beschichtungssysteme können alle bekannten und in der Lacktechnologie üblichen anorganischen und/oder organischen Pigmente bzw. Farbstoffe, sowie Hilfsmittel, wie z.B. Netzmittel, Entschäumer, Verlaufsmittel, Wachse, Slip-Additive, Stabilisatoren, Katalysatoren, Füllstoffe, Weichmacher und Lösemittel enthalten.

Die auf den erfindungsgemäßen Dispersionen basierenden Beschichtungssysteme lassen sich mit allen, dem Fachmann bekannten Applikationsmethoden auf die o.a. Materialien aufbringen, z.B. durch Streichen, Walzen, Gießen, Rakeln, Tauchen und Spritzen (air, airless, air mix etc.).

Die erfindungsgemäßen Polyurethan-Vinyl-Hybrid-Dispersionen können auch unmittelbar zum Verkleben beliebiger Substrate verwendet werden. Zur Erzielung von speziellen Klebeeigenschaften können die erfindungsgemäßen Polyurethan-Vinyl-Hybrid-Dispersionen mit anderen Kunststoffdispersionen oder -lösungen (siehe oben) abgemischt werden. Ferner können zur Verbesserung der Wärmestand- und Schälfestigkeit Vernetzer, wie z.B. wasseremulgierbare Polyisocyanate oder wasseremulgierbare Präpolymere mit terminalen Isocyanatgruppen, wasserlösliche oder - emulgierbare Melamin- oder Benzoguanaminharze zugesetzt werden.

Die auf den erfindungsgemäßen Polyurethan-Vinyl-Hybrid-Dispersionen basierenden Klebstoffe können die in der Klebstofftechnologie üblichen Zusatzstoffe, wie Weichmacher, Lösungsmittel, Filmbindehilfsmittel, Füllstoffe, synthetische und natürliche Harze enthalten. Sie eignen sich speziell zur Herstellung von Verklebungen von Substraten in der Kraftfahrzeugindustrie, z.B. Verklebung von Innenausbauteilen, und in der Schuhindustrie, z.B. zum Verkleben von Schuhsohle und Schuhschaft. Die Herstellung und Verarbeitung der auf den erfindungsgemäßen Polyurethan-Vinyl-Hybrid-Dispersionen basierenden Klebstoffe erfolgt nach den üblichen Methoden der Klebetechnologie, die bei wäßrigen Dispersions- und Lösungsklebstoffen angewendet werden.

Die erfindungsgemäßen Polyurethan-Vinyl-Hybrid-Dispersionen können - gegebenenfalls im Gemisch mit anderen Bindemitteln wie Alkydharzen - unter Zusatz von löslichen oder unlöslichen Farbstoffen oder Pigmenten zur Herstellung von Druckfarben verwendet werden.

Durch die nachfolgenden Beispiele wird die Erfindung näher erläutert:

### Beispiel 1: (Vergleichsbeispiel : nicht-selbstvernetzende Polyurethan-Vinyl Hybrid-Dispersion)

232,0 g eines Polyesters, hergestellt aus Hexandiol-1,6, Isophthalsäure und Adipinsäure, mit einer Hydroxyl-Zahl von 88 und einer Säurezahl kleiner 2 werden mit 23,0 g Dimethylolpropionsäure, 10,9 g Hexandiol-1,6 und 82,8 g N-Methylpyrrolidon-2 auf 90 °C erwärmt. Anschließend werden über einen Zeitraum von 25 bis 30 Minuten unter Rühren 73,9 g Isophorondiisocyanat dosiert. Nach weiteren 60 Minuten werden bei einer Temperatur von 90 °C 80,0 g Methylmethacrylat und 0,2 g 2,6-Di-tert.-butyl-4-methylphenol rasch zugegeben und homogenisiert. Danach werden 41,3 g Isophorondiisocyanat über einen Zeitraum von 10 Minuten dosiert und so lange bei 90 °C gerührt, bis der Gehalt an freien Isocyanatgruppen 1,11 Gew.-%, bezogen auf die Gesamteinwaage, beträgt. In die so erhaltene Präpolymer-Lösungwerden 18,9 g 2-Hydroxyäthylmethacrylat gegeben. Es wird weiter umgesetzt, bis keine freien Isocyanatgruppen mehr vorliegen. Nach Zugabe von 53,3 g Methylmethacrylat und 11,4 g Dimethyläthanolamin werden 758,0 g Wasser mit einer Temperatur von 70 °C zu der Präpolymer-Lösung unter intensivem Rühren gegeben. Anschließend werden bei einer Temperatur von 80 °C 0,7 g tert.-Butylhydroperoxid (80 %ig in Di-tert.-butylperoxid) rasch zugetropft. Nach weiteren 30 Minuten wird eine Lösung von 1,3 g Ascorbinsäure und 130,0 g Wasser über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Die Dispersion besitzt einen Festkörpergehalt von 36 % und einen pH-Wert von 7,3.

### Beispiel 2:

232,0 g eines Polyesters, hergestellt aus Hexandiol-1,6, Isophthalsäure und Adipinsäure, mit einer Hydroxyl-Zahl von 88 und einer Säurezahl kleiner 2 werden mit 23,0 g Dimethylolpropionsäure, 10,9 g Hexandiol-1,6 und 82,8 g N-Methylpyrrolidon-2 auf 90 °C erwärmt. Anschließend werden über einen Zeitraum von 25 bis 30 Minuten unter Rühren 73,9 g Isophorondiisocyanat dosiert. Nach weiteren 60 Minuten werden bei einer Temperatur von 90 °C 80,0 g Methylmethacrylat und 0,2 g 2,6-Di-tert.-butyl-4-methylphenol rasch zugegeben und homogenisiert. Danach werden 41,3 g Isophorondiisocyanat über einen Zeitraum von 10 Minuten dosiert und so lange bei 90 °C gerührt, bis der Gehalt an freien Isocyanatgruppen 1,11 Gew.-%, bezogen auf die Gesamteinwaage, beträgt. In die so erhaltene Präpolymer-Lösung werden 18,9 g 2-Hydroxyäthylmethacrylat gegeben. Es wird weiter umgesetzt, bis keine freien Isocyanatgruppen mehr vorliegen. Nach Zugabe von 37,3 g Methylmethacrylat, 16,0 g Diacetonacrylamid und 11,4 g Dimethyläthanolamin werden 658,0 g Wasser mit einer Temperatur von 70 °C zu der Präpolymer-Lösung unter intensivem Rühren gegeben. Anschließend werden bei einer Temperatur von 80 °C 0,7 g tert.-Butylhydroperoxid (80 %ig in Di-tert.-butylperoxid) rasch zugetropft. Nach weiteren 30 Minuten wird eine Lösung von 1,3 g Ascorbinsäure und 130,0 g Wasser über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Anschließend werden 8,2 g Adipinsäuredihydrazid, gelöst in 100 g Wasser, unter Rühren zugegeben. Die Dispersion besitzt einen Festkörpergehalt von 36 % und einen pH-Wert von 7,5.

### Beispiel 3: (Vergleichsbeispiel : nicht-selbstvernetzende Polyurethan-Vinyl-Hybrid-Dispersion)

232,0 g eines Polyesters, hergestellt aus Neopentylglykol, Hexandiol-1,6, Isophthalsäure und Adipinsäure, mit einer Hydroxyl-Zahl von 41 und einer Säurezahl kleiner 2 werden zusammen mit 23,0 g Dimethylolpropionsäure und 2,4 g Butandiol-1,4 in 175,8 g Methyläthylketon unter Rückfluß gelöst. Anschließend werden über einen Zeitraum von 30 bis 35 Minuten 93,3 g 4,4'-Dicyclohexylmethandiisocyanat unter Rühren dosiert und bei Rückflußtemperatur so lange gerührt, bis der Gehalt an freien Isocyanatgruppen 1,16 Gew.-%, bezogen auf die Gesamteinwaage, beträgt. In die so erhaltene Präpolymer-Lösung werden 0,2 g 2,6-Di-tert.-butyl-4-methylphenol und 49,3 g eines Umsetzungsprodukts von Versaticsäureglycidylester mit Methacrylsäure gegeben. Es wird weiter bei Rückflußtemperatur umgesetzt, bis keine freien Isocyanatgruppen mehr vorliegen. Nach Zugabe von 13,0 g Triäthylamin werden 1000,2 g Wasser mit einer Temperatur von 60 °C zu der Präpolymer-Lösung unter intensivem Rühren gegeben. Das Lösemittel Methyläthylketon wird anschließend durch Vakuumdestillation von der erhaltenen Dispersion azeotrop abgetrennt. Nach Zugabe von 107,7 g Methylmethacrylat, 107,7 g 2-Äthylhexylacrylat und 0,7 g tert.-Butylhydroperoxid (80 %ig in Di-tert.-butylperoxid) wird die Temperatur auf 80 °C erhöht. Nach weiteren 30 Minuten werden 1,3 g Ascorbinsäure, gelöst in 130 g Wasser, über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Die Dispersion besitzt einen Festkörpergehalt von 35 % und einen pH-Wert von 7,4.

### Beispiel 4:

232,0 g eines Polyesters, hergestellt aus Neopentylglykol, Hexandiol-1,6, Isophthalsäure und Adipinsäure, mit einer Hydroxyl-Zahl von 41 und einer Säurezahl kleiner 2 werden zusammen mit 23,0 g Dimethylolpropionsäure und 2,4 g Butandiol-1,4 in 175,8 g Methyläthylketon unter Rückfluß gelöst. Anschließend werden über einen Zeitraum von 30 bis 35 Minuten 93,3 g 4,4'-Dicyclohexylmethandiisocyanat unter Rühren dosiert und bei Rückflußtemperatur so lange gerührt, bis der Gehalt an freien Isocyanatgruppen 1,16 Gew.-%, bezogen auf die Gesamteinwaage, beträgt. In die so erhaltene Präpolymer-Lösung werden 0,2 g 2,6-Di-tert.-butyl-4-methylphenol und 49,3 g eines Umsetzungsprodukts von Versaticsäureglycidylester mit Methacrylsäure gegeben. Es wird weiter bei Rückflußtemperatur umgesetzt, bis keine freien Isocyanatgruppen mehr vorliegen. Nach Zugabe von 13,0 g Triäthylamin werden 900,2 g Wasser mit einer Temperatur von 60 °C zu der Präpolymer-Lösung unter intensivem Rühren gegeben. Das Lösemittel Methyläthylketon wird anschließend durch Vakuumdestillation von der erhaltenen Dispersion azeotrop abgetrennt. Nach Zugabe von 92,3 g Methylmethacrylat, 92,3 g 2-Äthylhexylacrylat, 30,8 g Diacetonacrylamid und 0,7 g tert.-Butylhydroperoxid (80 %ig in Di-tert.-butylperoxid) wird die Temperatur auf 80 °C erhöht. Nach weiteren 30 Minuten werden 1,3 g Ascorbinsäure, gelöst in 130 g Wasser, über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Anschließend werden 15,8 g Adipinsäuredihydrazid, gelöst in 100 g Wasser, zugegeben. Die Dispersion besitzt einen Festkörpergehalt von 34 % und einen pH-Wert von 7,6.

### Beispiel 5: (Vergleichsbeispiel : nicht-selbstvernetzende Polyurethan-Vinyl-Hybrid-Dispersion)

285,6 g eines Polyesters, hergestellt aus Hexandiol-1,6, Isophthalsäure und Adipinsäure, mit einer Hydroxyl-Zahl von 80 und einer Säurezahl kleiner 2 werden zusammen mit 22,1 g Dimethylolpropionsäure, 2,5 g Butandiol-1,4, 10,5 g Glycerinmethacrylat und 0,2 g 2,6-Di-tert.-butyl-4-methylphenol in 120 g Aceton unter Rückfluß gelöst. Anschließend werden über einen Zeitraum von 30 bis 40 Minuten 99,3 g 4,4'-Dicyclohexylmethandiisocyanat unter Rühren dosiert und so lange bei Rückflußtemperatur gerührt, bis keine freien Isocyanatgruppen mehr vorliegen. Nach Zugabe von 12,5 g Triäthylamin werden 1092,2 g Wasser mit einer Temperatur von 60 °C unter intensivem Rühren zu der Präpolymer-Lösung gegeben. Das Lösemittel Aceton wird anschließend durch Vakuumdestillation von der erhaltenen Dispersion abgetrennt. Nach Zugabe von 90,0 g Methylmethacrylat, 90,0 g n-Butylacrylat und 0,7 g tert.-Butylhydroperoxid (80 %ig in Di-tert.-butylperoxid) wird die Temperatur auf 80 °C erhöht. Nach weiteren 30 Minuten wird eine Lösung von 1,3 g Ascorbinsäure und 130 g Wasser über einen Zeitraum von 60 Minuten dosiert.

Die resultierende Polyurethan-Acryl-Hybrid-Dispersion wird auf Raumtemperatur abgekühlt und durch ein 5 µm Filtergewebe filtriert. Die Dispersion besitzt einen Festkörpergehalt von 34 % und einen pH-Wert von 7,2.

### Beispiel 6:

285,6 g eines Polyesters, hergestellt aus Hexandiol-1,6, Isophthalsäure und Adipinsäure, mit einer Hydroxyl-Zahl von 80 und einer Säurezahl kleiner 2 werden zusammen mit 22,1 g Dimethylolpropionsäure, 2,5 g Butandiol-1,4, 10,5 g Glycerinmethacrylat und 0,2 g 2,6-Di-tert.Butyl-4-methylphenol in 120 g Aceton unter Rückfluß gelöst. Anschließend werden über einen Zeitraum von 30 bis 40 Minuten 99,3 g 4,4'-Dicyclohexylmethandiisocyanat unter Rühren dosiert und so lange bei Rückflußtemperatur gerührt, bis keine freien Isocyanatgruppen mehr vorliegen. Nach Zugabe von 12,5 g Triäthylamin werden 992,2 g Wasser mit einer Temperatur von 60 °C unter intensivem Rühren zu der Präpolymer-Lösung gegeben. Das Lösemittel Aceton wird anschließend durch Vakuumdestillation von der erhaltenen Dispersion abgetrennt. Nach Zugabe von 75,0 g Methylmethacrylat, 75,0 g n-Butylacrylat, 30,0 g Diacetonacrylamid und 0,7 g tert.-Butyl-hydroperoxid (80 %ig in Di-tert.-butylperoxid) wird die Temperatur auf 80 °C erhöht. Nach weiteren 30 Minuten wird eine Lösung von 1,3 g Ascorbinsäure und 130,0 g Wasser über einen Zeitraum von 60 Minuten dosiert.

Die resultierende Polyurethan-Acryl-Hybrid-Dispersion wird auf Raumtemperatur abgekühlt und durch ein 5 µm Filtergewebe filtriert. Anschließend werden 15,4 g Adipinsäuredihydrazid, gelöst in 100,0 g Wasser, zugegeben. Die Dispersion besitzt einen Festkörpergehalt von 34 % und einen pH-Wert von 7,4.

Die neuartigen, selbstvernetzenden Polyurethan-Acryl-Hybrid-Dispersionen zeichnen sich durch eine verbesserte Wasser-, Lösemittel- und Chemikalienbeständigkeit aus.

Eine vergleichende Prüfung von nicht-vernetzenden und selbstvernetzenden Beschichtungssystemen auf Basis der Polyurethan-Acryl-Hybrid-Dispersionen Beispiele 1 - 6 wurde gemäß der Möbelnorm DIN 68861, Teil 1B durchgeführt. Die Dispersionen wurden vor der Applikation auf Mahagoni-furnierten Holzplatten mit dem Netzmittel Byk 346 (Hersteller: Fa. Byk Chemie GmbH) und dem Koaleszenzmittel Butyldiglykol (= BDG) versetzt. Von den so hergestellten Lacken wurden auf die Prüfplatten zweimal ein Naßfilm mit 150 µm Schichtdicke aufgebracht. Nach einer Trocknungsphase von 10 Tagen bei Raumtemperatur wurden die Beständigkeiten gegenüber den nachfolgend in der Tabelle aufgeführten Stoffen ermittelt.

### Beispiel 7:

232,0 g eines Polyesters, hergestellt aus Hexandiol-1,6, Isophthalsäure und Adipinsäure, mit einer Hydroxyl-Zahl von 88 und einer Säurezahl kleiner 2 werden mit 23,0 g Dimethylolpropionsäure, 10,9 g Hexandiol-1,6 und 82,8 g N-Methylpyrrolidon-2 auf 90 °C erwärmt. Anschließend werden über einen Zeitraum von 25 bis 30 Minuten unter Rühren 83,2 g Diphenylmethan-4,4'-diisocyanat dosiert. Nach weiteren 60 Minuten werden bei einer Temperatur von 90 °C 80 g Methylmethacrylat und 0,2 g 2,6-Di-tert.-butyl-4-methylphenol rasch zugegeben und homogenisiert. Danach werden 46,5 g Diphenylmethan-4,4'-diisocyanat über einen Zeitraum von 10 Minuten dosiert und so lange bei 90 °C gerührt, bis der Gehalt an freien Isocyanatgruppen 1,11 Gew.-%, bezogen auf die Gesamteinwaage, beträgt. Zu der so erhaltenen Präpolymer-Lösung werden 18,9 g 2-Hydroxyäthylmethacrylat gegeben. Es wird weiter umgesetzt bis keine freien Isocyanatgruppen mehr vorliegen. Nach der Zugabe von 37,3 g Methylmethacrylat, 16,0 g Diacetonacrylamid und 11,4 g Dimethyläthanolamin werden 672,5 g Wasser mit einer Temperatur von 70 °C zu der Präpolymer-Lösung unter intensivem Rühren gegeben. Anschließend werden bei einer Temperatur von 80 °C 0,7 g tert.-Butylhydroperoxid (80 %ig in Di-tert.-butylperoxid) rasch zugetropft. Nach weiteren 30 Minuten wird eine Lösung von 1,3 g Ascorbinsäure und 130,0 g Wasser über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Anschließend werden 8,2 g Adipinsäuredihydrazid, gelöst in 100 g Wasser, unter Rühren zugegeben. Die Dispersion besitzt einen Festkörpergehalt von 37 % und einen pH-Wert von 7,7.

### Beispiel 8:

232,0 g eines Polyesters, hergestellt aus Hexandiol-1,6, Isophthalsäure und Adipinsäure, mit einer Hydroxyl-Zahl von 88 und einer Säurezahl kleiner 2 werden mit 23,0 g Dimethylolpropionsäure, 10,9 g Hexandiol-1,6 und 82,8 g N-Methylpyrrolidon-2 auf 90 °C erwärmt. Anschließend werden über einen Zeitraum von 25 bis 30 Minuten unter Rühren 57,9 g Toluylendiisocyanat (Isomerenmischung: 20 % 2,6-Isomer, 80 % 2,4-Isomer) dosiert. Nach weiteren 60 Minuten werden bei einer Temperatur von 90 °C 80 g Methylmethacrylat und 0,2 g 2,6-Di-tert.-butyl-4-methylphenol rasch zugegeben und homogenisiert. Danach werden 32,4 g Toluylendiisocyanat (Isomerenmischung: 20 % 2,6-Isomer, 80 % 2,4-Isomer) über einen Zeitraum von 10 Minuten dosiert und so lange bei 90 °C gerührt, bis der Gehalt an freien Isocyanatgruppen 1,11 Gew.-% bezogen auf die Gesamteinwaage, beträgt. In der so erhaltenen Präpolymer-Lösung werden 18,9 g 2-Hydroxyäthylmethacrylat gegeben. Es wird weiter umgesetzt bis keine freien Isocyanatgruppen mehr vorliegen. Nach der Zugabe von 37,3 g Methylmethacrylat, 16,0 g Diacetonacrylamid und 11,4 g Dimethyläthanolamin werden 672,5 g Wasser mit einer Temperatur von 70 °C zu der Präpolymer-lösung unter intensivem Rühren gegeben. Anschließend werden bei einer Temperatur von 80 °C 0,7 g tert.-Butylhydroperoxid (80 %ig in Di-tert.-butylperoxid) rasch zugetropft. Nach weiteren 30 Minuten wird eine Lösung von 1,3 g Ascorbinsäure und 130,0 g Wasser über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Anschließend werden 8,2 g Adipinsäuredihydrazid, gelöst in 100 g Wasser, unter Rühren zugegeben. Die Dispersion besitzt einen Festkörpergehalt von 36 % und einen pH-Wert von 7,2.

### Beispiel 9:

232,0 g eines Polyesters, hergestellt aus Neopentylglykol, Hexandiol-1,6, Isophthalsäure und Adipinsäure, mit einer Hydroxyl-Zahl von 41 und einer Säurezahl kleiner 2 werden mit 23,0 g Dimethylolpropionsäure, 2,4 g Butandiol-1,4 in 175,8 g Methyläthylketon unter Rückfluß gelöst. Anschließend werden über einen Zeitraum von 30 bis 35 Minuten 89,1 g Diphenylmethan-4,4'-diisocyanat unter Rühren dosiert und unter Rückfluß so lange gerührt, bis der Gehalt an freien Isocyanatgruppen 1,16 Gew.-%, bezogen auf die Gesamteinwaage, beträgt. In die so erhaltene Präpolymer-Lösung werden 0,2 g 2,6-Di-tert.-butyl-4-methylphenol und 49,3 g des Umsetzungsprodukts von Versaticsäureglycidylester mit Methacrylsäure gegeben. Es wird weiter unter Rückflußtemperatur umgesetzt, bis keine freien Isocyanatgruppen mehr vorliegen. Nach Zugabe von 13,0 g Triäthylamin werden 969,0 g Wasser mit einer Temperatur von 60 °C zu der Präpolymer-Lösung unter intensivem Rühren gegeben. Das Lösemittel Methyläthylketon wird anschließend durch Vakuumdestillation von der erhaltenen Dispersion azeotrop abgetrennt. Nach Zugabe von 92,3 g Methylmethacrylat, 92,3 g 2-Äthylhexylacrylat, 30,8 g Diacetonacrylamid und 0,7 g tert.-Butylhydroperoxid (80 %-ig in Di-tert.-Butylperoxid) wird die Temperatur auf 80 °C erhöht. Nach weiteren 30 Minuten wird eine Lösung von 1,3 g Ascorbinsäure und 130,0 g Wasser über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Anschließend werden 15,8 g Adipinsäuredihydrazid, gelöst in 100 g Wasser, unter Rühren zugegeben. Die Dispersion besitzt einen Festkörpergehalt von 38 % und einen pH-Wert von 7,5.

### Beispiel 10:

232,0 g eines Polyesters, hergestellt aus Neopentylglykol, Hexandiol-1,6, Isophthalsäure und Adipinsäure, mit einer Hydroxyl-Zahl von 41 und einer Säurezahl kleiner 2 werden mit 23,0 g Dimethylolpropionsäure, 2,4 g Butandiol-1,4 in 175,8 g Methyläthylketon unter Rückfluß gelöst. Anschließend werden über einen Zeitraum von 30 bis 35 Minuten 62,0 g Toluylendiisocyanat (Isomerenmischung: 20 % 2,6-Isomer, 80 % 2,4-Isomer) unter Rühren dosiert und unter Rückfluß so lange gerührt, bis der Gehalt an freien Isocyanatgruppen 1,16 Gew.-% bezogen auf die Gesamteinwaage, beträgt. In der so erhaltenen Präpolymer-Lösung werden 0,2 g 2,6-Di-tert.-butyl-4-methylphenol und 49,3 g des Umsetzungsprodukts von Versaticsäureglycidylester mit Methacrylsäure gegeben. Es wird weiter unter Rückflußtemperatur umgesetzt, bis keine freien Isocyanatgruppen mehr vorliegen. Nach Zugabe von 13,0 g Triäthylamin werden 942,0 g Wasser mit einer Temperatur von 60 °C zu der Präpolymer-Lösung unter intensivem Rühren gegeben. Das Lösemittel Methyläthylketon wird anschließend durch Vakuumdestillation von der erhaltenen Dispersion azeotrop abgetrennt. Nach Zugabe von 92,3 g Methylmethacrylat, 92,3 g 2-Äthylhexylacrylat, 30,8 g Diacetonacrylamid und 0,7 g tert.-Butylhydroperoxid (80 %-ig in Di-tert.-butylperoxid) wird die Temperatur auf 80 °C erhöht. Nach weiteren 30 Minuten wird eine Lösung von 1,3 g Ascorbinsäure und 130,0 g Wasser über einen Zeitraum von 90 Minuten dosiert.

Die resultierende Polyurethan-Acryl-Hybrid-Dispersion wird auf Raumtemperatur abgekühlt und durch ein 5 µm Filtergewebe filtriert. Anschließend werden 15,8 g Adipinsäuredihydrazid, gelöst in 100 g Wasser, unter Rühren zugegeben. Die Dispersion besitzt einen Festkörpergehalt von 37 % und einen pH-Wert von 7,0.

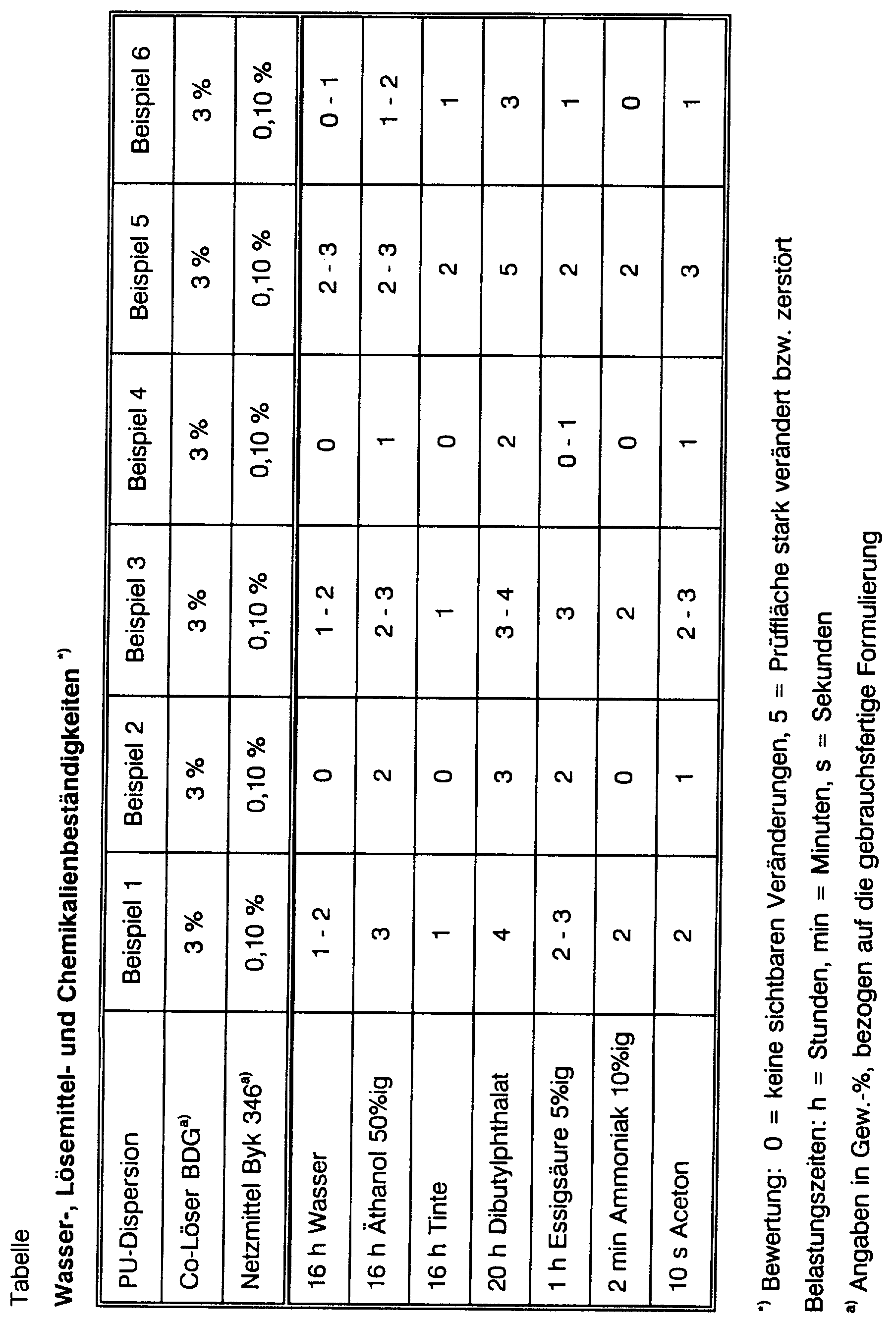

## Patentansprüche

1. Wäßrige selbstvernetzende Bindemittel, bestehend aus Polyhydraziden und Carbonylgruppen-haltigen Urethan-Vinyl-Hybridpolymeren sowie gegebenenfalls üblichen Zusätzen.

2. Wäßrige selbstvernetzende Bindemittel nach Anspruch 1, dadurch gekennzeichnet, daß die Polyhydrazide ein mittleres Molekulargewicht (Mₙ) von < 1000 aufweisen und aliphatische oder aromatische oder gemischt aliphatisch/aromatische Verbindungen mit mindestens zwei Hydrazin-, Hydrazid- und/oder Hydrazon-Gruppen sind.

3. Wäßrige selbstvernetzende Bindemittel nach Anspruch 1, dadurch gekennzeichnet, daß die Carbonylgruppen-haltigen Urethan-Vinyl-Hybridpolymeren durch radikalisch initiierte Polymerisation von vinylgruppenhaltigen Urethan-Makromonomerengemeinsam mit anderen Vinylmonomeren erhältlich sind, wobei mindestens eines der Vinylmonomeren eine oder mehrere Carbonylgruppen enthält, und der Massengehalt an Vinylblöcken in der Polyurethan-Vinyl-Hybrid-Dispersion bezogen auf die Masse des Feststoffes zwischen 1 und 95 %, bevorzugt zwischen 5 und 70 % beträgt.

4. Wäßrige selbstvernetzende Bindemittel nach Anspruch 1 und 3, dadurch gekennzeichnet, daß die Carbonylgruppen-haltigen Urethan-Vinyl-Hybridpolymeren durch radikalisch initiierte Polymerisation von vinylgruppenhaltigen Urethan-Makromonomeren gemeinsam mit anderen Vinylmonomeren erhältlich sind, wobei mindestens eines der Vinylmonomeren eine oder mehrere Carbonylgruppen enthält, und die Vinylgruppen an die Kettenenden der Urethan-Makromonomeren (terminal) und/oder längs der Makromonomerkette (lateral) chemisch gebunden sind.

5. Wäßrige selbstvernetzende Bindemittel nach Anspruch 1 bis 4, dadurch gekennzeichnet, daß die zur Herstellung der Urethan-Makromonomeren eingesetzten Polyhydroxyverbindungenausgewählt sind aus den Polyhydroxypolyäthern, den Polyhydroxypolyestern und den Polyhydroxypolycarbonaten.

6. Wäßrige selbstvernetzende Bindemittel nach Anspruch 1 bis 4, dadurch gekennzeichnet, daß die zur Herstellung der Urethan-Makromonomeren eingesetzten hydrophilen Verbindungen ausgewählt sind aus isocyanatfunktionellen oder hydroxyfunktionellen Polyalkylenoxiden und hydroxyfunktionellen anionischen, anionogenen, kationischen oder kationogenen Verbindungen.

7. Wäßrige selbstvernetzende Bindemittel nach Anspruch 1 bis 4, dadurch gekennzeichnet, daß die Vinylmonomeren ohne Carbonylgruppe ausgewählt sind aus der Gruppe der Ester von aliphatischen Alkoholen mit 1 bis 12 C-Atomen und von ungesättigten Carbonsäuren aus der Gruppe (Meth)Acrylsäure, (Iso)Crotonsäure und Vinylessigsäure, aus der Gruppe der Vinylester, der Vinyläther, der Vinylaromaten wie Styrol, Vinyltoluole oder Vinylnaphthaline, und die Vinylmonomeren mit mindestens einer Carbonylgruppe ausgewählt sind aus der Gruppe der aliphatischen ungesättigten Mono- oder Dialdehyde oder der aliphatischen ungesättigten Ketone.

8. Wäßrige selbstvernetzende Bindemittel nach Anspruch 1 bis 4 und 7, dadurch gekennzeichnet, daß die Vinylmonomeren ohne Carbonylgruppen Ester von aliphatischen Alkoholen mit 1 bis 12 C-Atomen und (Meth)Acrylsäure sind.

9. Wäßrige selbstvernetzende Bindemittel nach Anspruch 1 bis 8, dadurch gekennzeichnet, daß das Verhältnis der Anzahl der Hydrazin- zu Carbonylgruppen 1:40 bis 2:1, bevorzugt 1:20 bis 2:1 ist.

10. Verwendung von Bindemitteln nach Anspruch 1 bis 9 in Druckfarbenharzen, Klebstoffen sowie Beschichtungsmitteln für Holz, Papier, Kunststoffe, Leder, Textilien und metallische Untergründe, gegebenenfalls in Kombination mit Vernetzern, anderen Harzen, und weiteren Zusätze wie Pigmenten, Verlaufmittel etc.

11. Verwendung von Bindemitteln nach Anspruch 1 bis 9 in Basislacken für die Beschichtung von Metallen.

12. Verwendung von Bindemitteln nach Anspruch 1 bis 9 in Basislacken für die Beschichtung von Holz.

13. Verwendung von Bindemitteln nach Anspruch 12 in Basislacken für die Beschichtung von Kunststoffen.

## Claims

1. An aqueous, autocrosslinking binder comprising polyhydrazides and carbonyl-containing urethane-vinyl hybrid polymers and, if desired, conventional additives.

2. An aqueous, autocrosslinking binder as claimed in claim 1, wherein the polyhydrazides have an average molecular weight (Mₙ) of < 1000 and are aliphatic or aromatic or mixed aliphatic/aromatic compounds having at least two hydrazine, hydrazide and/or hydrazone groups.

3. An aqueous, autocrosslinking binder as claimed in claim 1, wherein the carbonyl-containing urethane-vinyl hybrid polymers are obtainable by free radical-initiated polymerization of vinyl-containing urethane macromonomers together with other vinyl monomers, at least one of the vinyl monomers containing one or more carbonyl groups, and the content by mass of vinyl blocks in the polyurethane-vinyl hybrid dispersion, relative to the mass of the solids content, being between 1 and 95%, preferably between 5 and 70%.

4. An aqueous, autocrosslinking binder as claimed in either of claims 1 and 3, wherein the carbonyl-containing urethane-vinyl hybrid polymers are obtainable by free radical-initiated polymerization of vinyl-containing urethane macromonomers together with other vinyl monomers, at least one of the vinyl monomers containing one or more carbonyl groups, and the vinyl groups being chemically bonded at the chain ends of the urethane macromonomers (terminal) and/or along the macromonomer chain (lateral).

5. An aqueous, autocrosslinking binder as claimed in any of claims 1 to 4, wherein the polyhydroxy compounds employed for the preparation of the urethane macromonomers are selected from polyhydroxy polyethers, polyhydroxy polyesters and polyhydroxy polycarbonates.

6. An aqueous, autocrosslinking binder as claimed in any of claims 1 to 4, wherein the hydrophilic compounds employed for the preparation of the urethane macromonomers are selected from isocyanate-functional or hydroxy-functional polyalkylene oxides and hydroxy-functional anionic, anionogenic, cationic or cationogenic compounds.

7. An aqueous, autocrosslinking binder as claimed in any of claims 1 to 4, wherein the vinyl monomers without a carbonyl group are selected from the group consisting of the esters of aliphatic alcohols having from 1 to 12 carbon atoms and of unsaturated carboxylic acids from the group consisting of (meth)acrylic acid, (iso)crotonic acid and vinyl acetic acid, or from the group consisting of vinyl esters, vinyl ethers and aromatic vinyl compounds such as styrene, vinyl toluenes or vinyl naphthalenes, and the vinyl monomers containing at least one carbonyl group are selected from the group consisting of aliphatic unsaturated mono- or dialdehydes or of aliphatic unsaturated ketones.

8. An aqueous, autocrosslinking binder as claimed in any of claims 1 to.4 and 7, wherein the vinyl monomers without carbonyl groups are esters of aliphatic alcohols having from 1 to 12 carbon atoms and (meth)acrylic acid.

9. An aqueous, autocrosslinking binder as claimed in any of claims 1 to 8, wherein the ratio of the number of hydrazine groups to carbonyl groups is from 1:40 to 2:1, preferably from 1:20 to 2:1.

10. The use of a binder as claimed in any of claims 1 to 9 in resins for printing inks, in adhesives and in coating compositions for wood, paper, plastics, leather, textiles and metallic substrates, if desired in combination with crosslinking agents, other resins, and further additives such as pigments, leveling agents, etc.

11. The use of a binder as claimed in any of claims 1 to 9 in basecoats for the coating of metals.

12. The use of a binder as claimed in any of claims 1 to 9 in basecoats for the coating of wood.

13. The use of a binder as claimed in claim 12 in basecoats for the coating of plastics.

## Revendications

1. Liants aqueux autoréticulants, constitués de polyhydrazides et de polymères hybrides de vinyle et d'uréthanne renfermant des groupes carbonyle, et éventuellement d'additifs usuels.

2. Liants aqueux autoréticulants selon la revendication 1, caractérisés en ce que les polyhydrazides présentent une masse moléculaire moyenne (Mₙ) < 1000 et sont des composés aliphatiques ou aromatiques ou mixtes aliphatiques/aromatiques ayant au moins deux groupes hydrazine, hydrazide et/ou hydrazone.

3. Liants aqueux autoréticulants selon la revendication 1, caractérisés en ce qu'on peut obtenir les polymères hybrides de vinyle et d'uréthanne renfermant des groupes carbonyle par polymérisation initiée de manière radicalaire de macromonomères d'uréthanne renfermant des groupes vinyle avec d'autres monomères de vinyle, dans lesquels au moins un des monomères de vinyle contient un ou plusieurs groupes carbonyle, et le titre en masse en blocs vinyle dans la dispersion hybride de polyuréthanne-vinyle, par rapport la masse de la matière solide est entre 1 et 95%, de préférence entre 5 et 70%.

4. Liants aqueux autoréticulants selon les revendications 1 et 3, caractérisés en ce qu'on peut obtenir les polymères hybrides de vinyle et d'uréthanne renfermant des groupes carbonyle par polymérisation initiée de manière radicalaire de macromonomères d'uréthanne renfermant des groupes vinyle avec d'autres monomères de vinyle, dans lesquels au moins un des monomères de vinyle contient un ou plusieurs groupes carbonyle, et les groupes vinyle sont liés chimiquement aux extrémités des chaînes des macromonomère d'uréthanne (laison terminale) et/ou le long de la chaîne du macromonomère (liaison latérale).

5. Liants aqueux autoréticulants selon les revendications 1 à 4, caractérisés en ce l'on choisit les composés polyhydroxylés utilisés pour la préparation des macromonomères d'uréthanne parmi les polyhydroxy-polyéthers, les polyhydroxy-polyesters et les polyhydroxy-polycarbonates.

6. Liants aqueux autoréticulants selon les revendications 1 à 4, caractérisés en ce l'on choisit les composés hydrophiles utilisés pour la préparation des macromonomères d'uréthanne parmi les polyoxydes d'alkylène à fonctionnalité hydroxy ou à fonctionnalité isocyanate et les composés à fonctionnalité hydroxy anioniques, aniogènes, cationiques ou catiogènes.

7. Liants aqueux autoréticulants selon les revendications 1 à 4, caractérisés en ce que l'on choisit les monomères de vinyle sans groupe carbonyle parmi les esters d'alcools aliphatiques ayant 1 à 12 atomes de carbone et d'acide carboxyliques insaturés choisis parmi l'acide (méth)acrylique, l'acide (iso)crotonique et l'acide vinylacétique, parmi les esters de vinyle, les éthers de vinyle, les composés aromatiques du vinyle, comme le styrène, les vinyltoluènes ou les vinylnaphtalènes, et les monomères de vinyle avec au moins un groupe carbonyle sont choisis parmi les mono- ou dialdéhydes aliphatiques insaturés ou les cétones aliphatiques insaturées.

8. Liants aqueux autoréticulants selon les revendications 1 à 4 et 7, caractérisés en ce que les monomères de vinyle sans groupes carbonyle sont des esters d'alcools aliphatiques avec 1 à 12 atomes de carbone avec l'acide (méth) acrylique.

9. Liants aqueux autoréticulants selon les revendications 1 à 8, caractérisés en ce que la proportion du nombre de groupes hydrazine par rapport aux groupes carbonyle est de 1:40 à 2:1, de préférence de 1:20 à 2:1.

10. Utilisation de liants selon les revendications 1 à 9 dans des résines de colorants d'impression, des colles et des produits de revêtement pour le bois, le papier, les matières plastiques, le cuir, les textiles et les substrats métalliques, éventuellement en combinaison avec des agents réticulants, d'autres résines, et d'autres additifs comme des pigments, des agents nivelants etc.

11. Utilisation de liants selon les revendications 1 à 9 dans des laques de base pour le revêtement de métaux.

12. Utilisation de liants selon les revendications 1 à 9 dans des vernis de base pour le revêtement de bois.

13. Utilisation de liants selon la revendication 12 dans des laques de base pour le revêtement de matières plastiques.
